# FASCICULE DE BREVET EUROPEEN

(11) **EP 1 200 765 B1**
(45) Date de publication et mention de la délivrance du brevet: **09.02.2005**
(21) Numéro de dépôt: 00951670.9
(22) Date de dépôt: 13.07.2000
(51) Int. Cl.: F16L 9/14, F16L 25/00, B29C 37/00

(54) **ENSEMBLE COMPRENANT UN TUBE ET UN MANCHON**
ANORDNUNG VON ROHR UND MUFFE
ASSEMBLY COMPRISING A TUBE AND A SLEEVE

(30) Priorité: 26.07.1999 FR 9909644
(43) Date de publication de la demande: 02.05.2002
(73) Titulaire: Gitzo Holding, Societe Anonyme, 94044 Creteil (FR)
(72) Inventeur: DAVID, Laurent, F-91260 Juvisy sur Orge (FR); MITTELSTAEDT, Michael, F-77590 Bois le Roi (FR)
(74) Mandataire: Cantaluppi, Stefano
(86) Numéro de dépôt international: PCT/FR2000/002027
(87) Numéro de publication internationale: WO 2001/007815

(56) Documents cités:
- US-A- 4 729 806
- US-A- 4 921 283
- US-A- 5 398 975

## Description

La présente invention concerne les tubes en matériau composite incluant des fibres de carbone noyées dans une résine et, plus précisément, de tels tubes dont au moins une extrémité est pourvue d'un manchon permettant d'immobiliser ensemble deux tubes coaxiaux. L'invention concerne également les dispositifs de support de type tripode ou monopode, par exemple utilisés dans le domaine des prises de vues ou de mesures.

L'utilisation des matériaux composites incluant des fibres de carbone noyées dans une résine époxyde est bien connue pour apporter des caractéristiques de plus grande résistance mécanique pour un poids relativement peu élevé.

Le document FR-A-2 772 301 décrit un tel élément en matériau composite et son procédé de fabrication. Un gel est disposé sur un mandrin de manière à créer une couche superficielle apportant de bonnes caractéristiques de glissement sur la paroi interne du tube achevé, puis il est prépolymérisé. Ensuite, les couches de tissus aux fibres de carbones sont appliquées et cuites à une température appropriée jusqu'à polymérisation complète. Une couche extérieure d'un gel additionnel peut favoriser la constitution d'une surface extérieure à faible coefficient de frottement.

Les tubes ou cylindres au carbone ne peuvent être réalisés qu'en longueurs relativement courtes, ce qui implique, pour beaucoup d'applications, d'assurer une connexion de plusieurs tubes successifs pour obtenir la longueur requise pour l'application.

Le document US-A-4 941 692 prévoit ainsi des raccords profilés adhésifs entre tubes successifs, un manchon en résine appropriée contenant également des fibres de carbone venant, dans la zone de jonction, renforcer le plus long tube ainsi obtenu.

Lorsque les tubes doivent présenter des longueurs susceptibles de varier, il est préférable d'utiliser un ensemble télescopique mettant en oeuvre les gels du document FR-A-2 772 301 pour assurer le glissement relatif des tubes. Toutefois, dès lors, un moyen de fixation de la longueur totale est requis. Une extrémité d'un tube est alors favorablement pourvue d'un manchon éventuellement muni d'un filetage permettant une coopération avec une pièce de serrage ou équivalent. Dans un tel cas, le manchon doit être fermement ancré au tube de carbone, ce qui va à l'encontre du faible coefficient de frottement superficiel des tubes au carbone.

**Le document US-A-4941692 ou le document US 5 348 975 proposent d'adjoindre un manchon en matière plastique sur l'extrémité d'un tube en matériau composite. Ce manchon est préformé en utilisant un mandrin aux dimensions du tube à équiper, puis est placé et collé sur l'extrémité du tube.**

La présente invention se situe dans ce contexte et prévoit un ensemble comprenant un tube primaire en matériau composite équipé d'un manchon permettant d'obvier aux inconvénients précités, le manchon étant prévu pour assurer une jonction par serrage d'un tube secondaire coaxial.

Selon l'invention, l'ensemble comprend un tube primaire en matériau composite incluant des fibres de carbone noyées dans une résine, dont une extrémité est pourvue d'un manchon en matière plastique, tel qu'un polyamide, éventuellement muni d'un filetage de jonction, le manchon étant obtenu par injection de matériau en surmoulage du tube.

De préférence, le tube comporte au moins deux couches adjacentes de fibres de carbone, la couche interne étant une couche dont les fibres sont substantiellement longitudinales, tandis que la couche externe comporte des fibres disposées de façon hélicoïdale,

De préférence, le matériau constituant le manchon est chargé de fibres courtes, de manière à présenter un coefficient de dilatation thermique sensiblement équivalent à celui du tube sur une plage de température comprise entre -50 °C et +100 °C environ. Ces fibres courtes peuvent favorablement être des fibres de verre.

De façon avantageuse, l'extrémité du tube pourvue du manchon présente une pluralité de reliefs que le matériau du manchon vient emplir pendant l'étape d'injection en surmoulage.

L'invention sera mieux comprise, et d'autres buts, avantages et caractéristiques de celle-ci apparaîtront plus clairement à la lecture de la description qui suit de modes préférés de réalisation donnés à titre non limitatif et à laquelle deux planches de dessins sont annexées sur lesquelles :
La Figure 1 représente schématiquement en coupe longitudinale un tube en matériau composite conforme à l'invention ;
les Figures 2a et 2b illustrent deux types de relief d'ancrage d'un manchon sur une extrémité d'un tube au carbone ; et
les Figures 3a et 3b représentent schématiquement en coupe deux exemples de manchon appropriés conformément à l'invention.

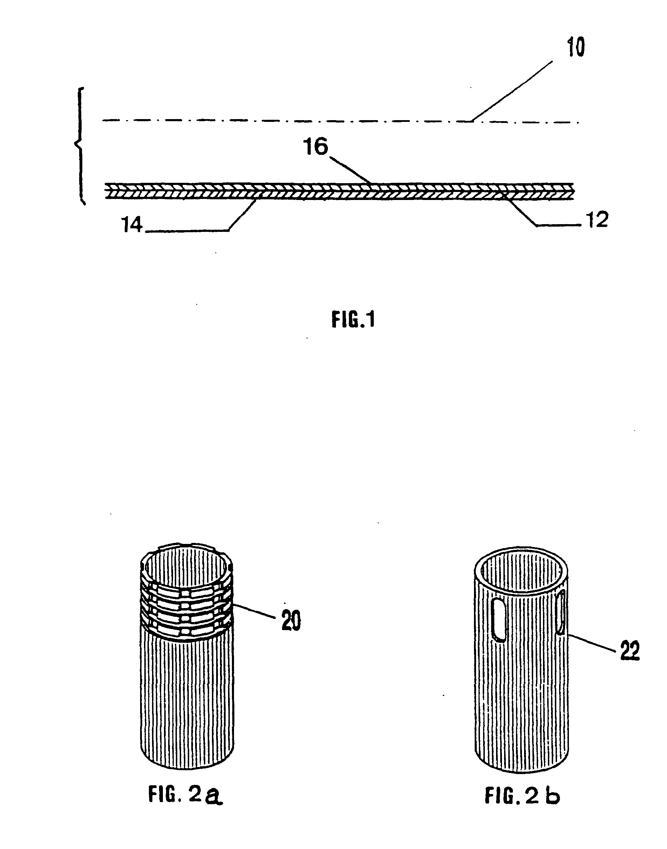

En référence maintenant aux Figures qui viennent d'être décrites, le tube selon l'invention a été schématiquement représenté en coupe longitudinale sur la Figure 1. Un tel tube peut être le tube primaire ou un tube secondaire coaxial au tube primaire et à coulissement télescopique. Le tube présente un axe de révolution 10 et comporte, dans l'exemple illustré, deux couches adjacentes 12, 14 de fibres de carbone noyées dans une résine époxyde. Bien évidemment, le tube pourra comporter d'autres couches incluant ou non des fibres de carbone.

La couche interne 12 inclut des fibres substantiellement parallèles à l'axe 10 du tube, c'est à dire des fibres longitudinales, tandis que la couche externe 14 inclut des fibres disposées de façon hélicoïdale, éventuellement croisées.

De ce fait, on obtient une très grande rigidité du tube et on évite substantiellement toute flèche de l'axe longitudinal 10, notamment lorsque le tube est utilisé en porte-à-faux.

De préférence, la paroi interne du tube est recouverte d'un gel polymérisé assurant un faible coefficient de frottement favorisant une utilisation télescopique de plusieurs tubes coaxiaux.

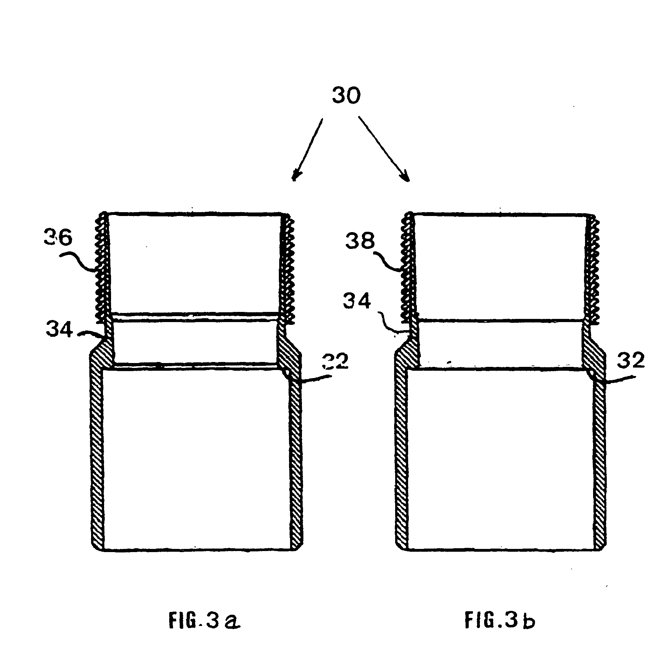

Une extrémité du tube primaire est pourvue d'un manchon 30 tel que représenté sur les Figures 3. Ce manchon 30 est obtenu par injection d'un matériau tel qu'un polyamide chargé de fibres directement par surmoulage du tube.

Pour favoriser un bon ancrage du manchon 30 sur le tube, l'extrémité concernée du tube présente une pluralité de reliefs 20, 22 comme représenté sur les Figures 2a et 2b. Sur la Figure 2a, on a représenté des reliefs en forme de rainures axiales 20, et sur la Figure 2b, des reliefs en forme d'orifices elliptiques 22.

Toute autre forme de relief peut être choisie, comme des rainures longitudinales, des ondulations superficielles, des gorges circulaires ou hélicoïdales, des orifices arrondis, ainsi que toute combinaison de ces reliefs en fonction de l'accroche souhaitée (en rotation et/ou en translation axiale).

De préférence, ces reliefs ne concernent que la couche externe 14 du tube de manière à ne pas affecter la rigidité globale du tube ; dans ce cas, ils sont dits aveugles. Ils peuvent cependant être constitués par des orifices affectant ou traversant les deux couches 12, 14 du matériau composite incluant des fibres de carbone.

De façon caractéristique, on réalise un tel tube au moyen d'une broche (non représentée) dont le diamètre extérieur est sensiblement égal au diamètre interne du tube. Un gel anti-frottement 16 est d'abord prépolymérisé, puis il est recouvert des deux couches 12 et 14 de résine époxyde contenant les fibres de carbone. Après durcissement, les reliefs 20, 22 sont obtenus par usinage partiel des tubes, avant ou après découpage du tube à la longueur souhaitée.

L'extrémité à pourvoir d'un manchon est ensuite recouverte d'un moule d'injection d'un matériau à base de polyamide. Ce matériau est, de préférence, chargé de fibres courtes, par exemple de verre, en quantité telle que les coefficients respectifs de dilatation du tube et du manchon soient sensiblement identiques sur une plage de fonctionnement prévue entre -50 °C et +100 °C environ. Le matériau est alors injecté dans le moule, puis amené à durcir.

De cette façon, le matériau injecté vient directement emplir les reliefs 20, 22 pour assurer l'accroche voulue.

Le manchon 30 peut affecter différentes formes, dont deux seulement ont été illustrées sur les Figures 3a et 3b. Le manchon 30 présente un épaulement 32 sur lequel vient en butée le tube. Un col 34 va recevoir un moyen de serrage. Sur la Figure 3a, ce moyen de serrage coopère avec une bague filetée en aluminium 36 frettée sur le col 34. Sur la Figure 3b, il coopère directement avec une partie filetée 38 prévue sur le col.

Dans une utilisation de type télescopique, un tube extérieur vient en butée contre l'épaulement 32, tandis qu'un tube intérieur affecte un diamètre extérieur sensiblement égal au diamètre intérieur du col 34. Un verrouillage en position relative des deux tubes est alors obtenu, soit en pratiquant au moins une fente longitudinale dans le col 34 du manchon 30, soit en apportant une bague plastique entre le col 34 et le tube intérieur, de telle manière que le manchon 30 vienne serrer le tube intérieur directement ou par l'intermédiaire de la bague plastique lorsque le moyen de serrage est vissé sur le pas de vis 36, 38.

L'homme de l'art aura compris que l'on pourra ainsi utiliser l'ensemble qui vient d'être décrit pour constituer au moins un pied d'un support pour un appareil de prises de vues et/ou de mesures.

Dans un exemple de réalisation, le diamètre extérieur du tube était de 24 mm, tandis que le diamètre intérieur du col 34 du manchon 30 était de 21 mm. Le manchon s'étendait sur une longueur d'environ 25 mm du tube, et la longueur du col était de l'ordre de 14 mm. Les rainures 20 (Figure 2a) ou les orifices 22 (Figure 2b) pénétraient d'environ 0,5 mm dans la couche externe 14 de carbone du tube. Dans un autre exemple, les orifices 22 traversaient les deux couches.

Bien que l'on ait représenté et décrit ce que l'on considère actuellement être les modes de réalisation préférés de la présente invention, il est évident que l'Homme de l'Art pourra y apporter différents changements et modifications sans sortir du cadre de la présente invention tel que défini dans les revendications.

## Revendications

1. Ensemble comprenant un tube en matériau composite incluant des fibres de carbone noyées dans une résine, dont une extrémité est pourvue d'un manchon (30) en matière plastique tel qu'un polyamide éventuellement muni d'un filetage de jonction (36, 38),
**caractérisé en ce que**
le dit manchon (30) est obtenu par injection de matériau en surmoulage du dit tube.

2. Ensemble selon la revendication 1, **caractérisé en ce que** le dit matériau composite constituant le dit tube comporte deux couches adjacentes (12, 14) de fibres de carbone noyées dans du carbone, la couche interne (12) étant une couche dont les fibres sont substantiellement longitudinales, tandis que la couche externe (14) comporte des fibres disposées de façon hélicoïdale.

3. Ensemble selon la revendication 1 ou 2, **caractérisé en ce que** le matériau constituant le dit manchon (30) est chargé de fibres courtes **pour lui conférer** un coefficient de dilatation thermique sensiblement équivalent à celui du tube sur une plage de température comprise entre -50 °C et +100 °C environ.

4. Ensemble selon la revendication 3, **caractérisé en ce que** les dites fibres courtes sont des fibres de verre.

5. Ensemble selon l'une quelconque des revendications précédentes, **caractérisé en ce que** l'extrémité du dit tube pourvue du dit manchon (30) présente une pluralité de reliefs (20, 22) que le dit matériau du dit manchon (30) vient emplir pendant l'étape d'injection en surmoulage.

6. Ensemble selon la revendication 5, **caractérisé en ce que** les dits reliefs (20, 22) n'affectent que la dite couche externe (14) du dit tube.

7. Ensemble selon la revendication 5 ou 6, **caractérisé en ce que** les dits reliefs (20, 22) sont choisis parmi les rainures axiales et longitudinales, les ondulations superficielles similaires, les gorges circulaires, les gorges hélicoïdales, les orifices de toute forme, traversants ou aveugles, et les combinaisons de ceux-ci.

8. Ensemble selon l'une quelconque des revendications précédentes, **caractérisé en ce que** le dit tube est réalisé sur une broche rigide dont le diamètre extérieur est sensiblement égal au diamètre interne du dit tube.

9. Ensemble selon l'une quelconque des revendications précédentes, **caractérisé en ce que** le dit tube accueille, de façon télescopique, un autre tube coaxial de plus petit diamètre.

10. Dispositif de support, notamment pour appareil de prise de vues, **caractérisé en ce qu'**il comprend au moins un pied conforme à l'ensemble selon l'une quelconque des revendications précédentes.

## Claims

1. Assembly comprising a tube in composite material including carbon fibers embedded in a resin, an extremity of which is equipped with a sleeve (30) in plastic material such as a polyamide, optionally equipped with a jointing thread (36, 38),
**characterized in that**
said sleeve (30) is obtained by overmolding injection of material on the tube.

2. Assembly according to claim 1, **characterized in that** said composite material constituting said tube comprises two adjacent layers (12, 14) of carbon fibers embedded in carbon, the inner layer (12) being a layer whose fibers are substantially longitudinal, whereas the outer layer (14) comprises helically arranged fibers.

3. Assembly according to claim 1 or 2, **characterized in that** the material constituting said sleeve (30) is reinforced with short fibers so as to have a thermic dilatation coefficient approximately equivalent to that of the tube over a temperature range comprised between about -50°C and about +100°C.

4. Assembly according to claim 3, **characterized in that** said short fibers are glass fibers.

5. Assembly according to any of the preceding claims, **characterized in that** the extremity of said tube equipped with said sleeve (30) has a plurality of embossments (20, 22) which are filled with said material of said sleeve (30) during the overmolding injection step.

6. Assembly according to claim 5, **characterized in that** said embossments (20, 22) only affect said outer layer (14) of said tube.

7. Assembly according to claim 5 or 6, **characterized in that** said embossments (20, 22) are selected among axial and longitudinal grooves, similar superficial corrugations, circular grooves, helix-shaped grooves, traversing or blind openings of all shapes, and combinations of those.

8. Assembly according to any of the preceding claims, **characterized in that** the tube is made on a rigid pin whose external diameter is approximately equal to the internal diameter of said tube.

9. Assembly according to any of the preceding claims, **characterized in that** said tube receives in a telescopic manner another coaxial tube having a smaller diameter.

10. Support device, in particular for filming apparatus, **characterized in that** it comprises at least one leg conformed as the assembly according to any of the preceding claims.

## Patentansprüche

1. Anordnung umfassend ein Rohr aus Verbundmaterial enthaltend Kohlenstofffasern gebunden in einem Harz, dessen eines Ende mit einer Muffe (30) aus Kunststoffmaterial versehen ist, wie einem Polyamid, eventuell ausgerüstet mit einem Anschlussgewinde (36, 38), **dadurch gekennzeichnet, dass** die Muffe (30) durch Einspritzen von Material beim Umgießen des Rohrs erhalten ist.

2. Anordnung nach Anspruch 1, **dadurch gekennzeichnet, dass** das Verbundmaterial, das das Rohr bildet, zwei benachbarte Lagen (12, 14) aus Kohlenstofffasern gebunden in Kohlenstoff umfasst, wobei die innere Lage (12) eine Lage ist, deren Fasern im Wesentlichen längsgerichtet sind, während die äußere Lage (14) schraubenförmig angeordnete Fasern umfasst.

3. Anordnung nach Anspruch 1 oder 2, **dadurch gekennzeichnet, dass** das Material, das die Muffe (30) bildet, mit kurzen Fasern versehen ist, um ihm einen thermischen Ausdehnungskoeffizienten im Wesentlichen gleich dem des Rohrs im Temperaturbereich zwischen ungefähr -50 °C und +100 °C zu verleihen.

4. Anordnung nach Anspruch 3, **dadurch gekennzeichnet, dass** die genannten kurzen Fasern Glasfasern sind.

5. Anordnung nach einem der vorhergehenden Ansprüche, **dadurch gekennzeichnet, dass** das mit der Muffe (30) versehene Ende des Rohrs eine Mehrzahl von Reliefs (20, 22) aufweist, die das Material der Muffe (30) während des Einspritzschritts beim Umgießen auffüllt.

6. Anordnung nach Anspruch 5, **dadurch gekennzeichnet, dass** die Reliefs (20, 22) nur die äußere Lage (14) des Rohrs betreffen.

7. Anordnung nach Anspruch 5 oder 6, **dadurch gekennzeichnet, dass** die Reliefs (20, 22) gewählt sind aus axialen und längsgerichteten Rillen, ähnlichen oberflächlichen Wellen, kreisförmigen Auskehlungen, schraubenförmigen Auskehlungen, Öffnungen jeglicher Form, durchgehend oder blind und Kombinationen davon.

8. Anordnung nach einem der vorhergehenden Ansprüche, **dadurch gekennzeichnet, dass** das Rohr auf einem starren Dorn ausgeführt wird, dessen Außendurchmesser im Wesentlichen gleich dem Innendurchmesser des Rohrs ist.

9. Anordnung nach einem der vorhergehenden Ansprüche, **dadurch gekennzeichnet, dass** das Rohr teleskopartig ein weiteres koaxiales Rohr mit kleinerem Durchmesser aufnimmt.

10. Stützvorrichtung, insbesondere für Aufnahmegeräte, **dadurch gekennzeichnet, dass** sie mindestens einen Fuß gemäß der Anordnung nach einem der vorhergehenden Ansprüche umfasst.
